# EUROPEAN PATENT SPECIFICATION

(11) **EP 4 086 450 B1**
(45) Date of publication and mention of the grant of the patent: **04.09.2024**
(21) Application number: 21172314.3
(22) Date of filing: 05.05.2021
(51) Int. Cl.: F03D 1/06

(54) **A ROTOR BLADE FOR A WIND TURBINE, A WIND TURBINE, AND A METHOD FOR MANUFACTURING THE ROTOR BLADE**
ROTORBLATT FÜR EINE WINDTURBINE, WINDTURBINE UND VERFAHREN ZUR HERSTELLUNG DES ROTORBLATTES
PALE DE ROTOR D'UNE ÉOLIENNE, ÉOLIENNE ET PROCÉDÉ DE FABRICATION DE LA PALE DE ROTOR

(43) Date of publication of application: 09.11.2022
(73) Proprietor: LM Wind Power A/S, 6000 Kolding (DK)
(72) Inventor: Hancock, Mark, 6000 Kolding (DK)
(74) Representative: Zimmermann & Partner Patentanwälte mbB

(56) References cited:
- EP-A1- 2 341 241
- JP-A- S62 282 175
- JP-B2- H 081 167
- US-A1- 2012 169 060
- US-A1- 2015 204 307
- US-B1- 6 276 641
- US-B2- 10 451 037

## Description

### TECHNICAL FIELD

The present subject matter relates generally to wind turbines, and more particularly, to a rotor blade for a wind turbine having a specific configuration for connecting a first shell with a second shell at a trailing edge of the rotor blade.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Rotor blades for wind turbines extend in a longitudinal direction and form an aerodynamic profile for creating a lift by establishing a suction side and a pressure side when the rotor blade placed in flow of a fluid, in particular when the rotor blade is placed in an airflow, for example caused by wind.

A body of a rotor blade may be formed by two rotor blade shells which are at least connected to each other at a leading edge and at a trailing edge. The specific form of the trailing edge has great consequences on the generation of acoustic emissions and as well is subject to stress, alternating loads and further environmental influences.

According to known technique, the shells of the rotor blade are connected with each other at the trailing edge by using specific adhesive. In order to establish a reliable connection at the trailing edge a remarkable amount of adhesive is required in order to provide a trailing edge connection having a sufficiently large connective surface between the two shells.

The international patent application WO 2010/023 140 A1 describes a trailing edge assembly, comprising a first shell and a second shell, and at least one flexible adhesive limiting member extending between said shells. An adhesive is provided between the shells to bind the shells to each other, wherein the adhesive is limited by the flexible adhesive limiting member such that a concave front line surface of the adhesive is defined. JP S62 282175 A and US 10 451 037 B2 relate to rotor blades of wind turbines.

Known techniques as exemplary described have certain deficits with respect to stability, manufacturing effort, and/or weight.

### BRIEF DESCRIPTION

Aspects and advantages of the invention will be set forth in part in the following description, or may be obvious from the description, or may be learned through practice of the invention.

In one aspect, the present disclosure is directed to a rotor blade of the wind turbine according to independent claim 1. A rotor blade has a first shell and a second shell, which are connected with each other at least by a leading edge connection at a leading edge and by a trailing edge connection at a trailing edge. By this, the shells form an aerodynamic profile having a first aerodynamic surface formed by the first shell and a second aerodynamic surface formed by the second shell.

Consequently, the rotor blade has a chord length being measured from the tip of the leading edge to the tip of the trailing edge and a respective chordwise direction. Accordingly, a profile direction can be defined which is essentially extending perpendicular to the chordwise direction. The chordwise direction and the profile direction extend in a profile plane having a specific chord length and profile height. The rotor blade extends in a longitudinal direction about the blade length measured from a blade root up to a blade tip. The longitudinal direction may be essentially perpendicular with respect to the profile plane.

The rotor blade may have a variety of different aerodynamic profiles changing according to a respective longitudinal position of a specific aerodynamic profile. Thus, chord length and profile height change according to a respective longitudinal position. Generally, the rotor blade may be structured by defining a leading edge area, a central area and a trailing edge area.

According to the aforementioned aspect of the invention, the rotor blade comprises at least one connective element comprising a first shell support portion, a second shell support portion, and an element support portion. The first shell support portion is connected to the element support portion by a first arm, the second shell support portion is connected to the element support portion by a second arm. The connective element is positioned between the first shell and the second shell.

Details of the connective element are generally explained with respect to a profile plane of the rotor blade if not explicitly referenced with respect to a further direction of the rotor blade, for example, the longitudinal direction. Thus, the preceding and subsequent description of the connective element generally refers to a two-dimensional shape within a profile plane if not stated otherwise.

The connective element has a worm-like shape, wherein the first shell support portion merges into the first arm, the first arm forms into the element support portion, the element support portion merges into the second arm, wherein the second arm holds the second support portion.

The placement of the connective element between the first shell and the second shell is achieved by providing a first shell connection being effective between the first shell support portion and the first shell, by a second shell connection being effective between the second shell support portion and the first shell, and by an element connection being effective between the element support portion and the second shell. Hence, the connective element forms connection surfaces, in fact the first shell support portion forms a first connection surface, the second shell support portion forms a second connection, and surface the element support portion forms an element connection surface, wherein each respective surface is subject to be firmly connected to an inner surface of the respective shell.

Such connection can be established by providing adhesive or resin to the respective connection such that respective structures establish a binding connection. The use of adhesive or resin shall not limit the subject matter, also further alternatives off connecting surfaces to each other if applicable can be used.

According to the aspect, the rotor blade further comprises a main support structure for increasing the bending stiffness of the rotor blade by connecting the first shell and the second shell. Furthermore, the main support structure is at least partially arranged in chordwise direction in a central area of the rotor blade which is extending in chordwise direction from 20% to 60% of the chord length. The main support structure comprises a connecting support structure between the first shell and the second shell. Connecting support structure may at least partially extend perpendicular to the chordwise direction such, that that a moment of inertia against bending in a flap wise direction of the rotor blade is drastically increased. By definition, the main support structure is a different technical entity than the connective element. The main support structure is at least partially arranged from 0% chord length to 60% chord length. Any structure connecting the first shell and the second shell in at least partially arranged from 0% chord length to 60% chord length is to be understood as being the main support structure and must not be understood as being the connective element. The main support structure may comprise a first bending support structure extending mainly in chordwise direction and being arranged within the first shell and/or second shell, or being connected to an inner surface of the first shell and/or to an inner surface of the second shell.

It is to be observed that the connective element is a different technical subject compared with the main support structure. Specifically, the connective element is not the main support structure, for example the connective element is not the shear web, the spar cap, and/or a combination thereof.

For example, the first bending support structure of the main support structure may be embodied as a spar cap or a plurality of spar caps, wherein the respective spar cap can be arranged within the first or second shell or can be attached to a respective inner surface of the first and second shell. For example, together with the connecting support structure, the first bending support structure and the second bending support structure may generally form an I-beam. Additionally or alternatively, the main support structure may have a form of a box spar, wherein portions of said box spar extending roughly in chordwise direction provide the function of the first bending support structure (spar caps), and wherein portions of the box spar extending at least partially perpendicular to the chordwise direction provide the function of the second bending structure. Furthermore, it is possible that the main support structure may have an alternative configuration or shape in the profile plane, for example, having a Z-, Y, double-Y-shape. In other examples, a rotor blade having a connective element according to one of the described embodiments does not have a spar cap or shear web.

The main support structure can be arranged in chordwise direction essentially in an area of 10% to 60% of the chord length, preferably of 15% to 60%, in particular of 20% to 50% of the chord length.

According to an embodiment, the connective element is in chordwise direction an integrally manufactured entity and/or is not formed in chordwise direction from a plurality of portions being connected when being mounted within the rotor blade shells or prior of being mounted.

Furthermore, the connective element is not formed by a plurality of girders being positioned next to each other.

According a further embodiment, the connective element does exclusively comprise not more than two arms, not more than two shell support portions and not more than one single element support portion.

According to an embodiment, the first aerodynamic surface of the first shell may act as a suction surface of the rotor blade, wherein the second aerodynamic surface of the second shell establishes a pressure surface. Alternatively, the first aerodynamic surface of the first shell functions as pressure surface of the rotor blade, wherein the second aerodynamic surface of the second shell is a suction surface.

The aspect as described provides for the first time a separation of technical functions previously provided entirely and exclusively by the trailing edge connection: on the one hand, a majority of the loads and forces may be transferred and carried by the connective element, by its arrangement between the first and the second shell, and by its connection with the first and the second shell. On the other hand, the performance of the rotor blade and of the trailing edge is optimized, for example having reduced acoustic emissions, by providing a precise form of the trailing edge connection. In particular, the trailing edge connection can be delicately tailored by using a reduced amount of adhesive at the trailing edge between the first shell and the second shell. Specifically, the size of the trailing edge connection, in particular in means of connecting surface area, can be limited. As a consequence, compared to known techniques, an overall weight of adhesive can be drastically reduced, the probability of a formation of cracks in the adhesive is also tremendously lowered, and a specific well-defined bending stiffness can be provided.

According to an embodiment, the connective element is flexible before being glued between the first blade shell and the second shell. In contrast, when the rotor blade is manufactured and the connective element is firmly attached to the inner surfaces of the shells, the entire structure provides an elevated rigidity against bending in flapwise direction.

According to an embodiment, a size of the trailing edge connection in chordwise direction may not exceed 5%, in particular may not exceed 3%, preferably may not exceed 2%, of a respective chord length, and/or may not exceed 400 mm, in particular may not exceed 200 mm, preferably may not exceed 100 mm.

It is to be noted, that the rotor blade may comprise one single connective element as described in the present disclosure or a plurality thereof. For example, the connective element may be formed by a plurality of single connective elements being arranged abutting each other in longitudinal direction, and/or being placed at least partially parallel to each other, and/or being connected with each other in longitudinal direction in order to form the connective element. In particular, when details of "the" connective element are discussed in the context of this disclosure, the related teaching may refer mutatis mutandis to a plurality of connective elements. For example, if a specification of "the" connective element in a root portion of the rotor blade differs from specifications of "the" connective element in a tip portion or middle section of the rotor blade, "the" connective element may vary along its longitudinal direction, and/or may be formed by differently embodied single connective elements which jointly form "the" connective element. Optionally or additionally, a plurality of connective elements may come with different specific embodiments of each connective element.

According to a specific embodiment, the connective element may have at least further shell support portions, further element portions, and/or further arms connecting further shell support portions with an element portion. For example, the connective element may meander while having a worm-like shape, possibly in a seesaw-manner, between the first shell and the second shell.

According to an embodiment, the connective element is arranged in the trailing edge area of the rotor blade. The term "trailing edge area" refers to an area of the rotor blade in chordwise direction extending between the main support structure and the trailing edge. In particular, the entire connective element or each of a plurality of connective elements is placed essentially and entirely within the mentioned area. In this regard, the term "essentially" refers to structures of the connective element mainly carrying and transferring forces and loads. Thus, a portion of the connective element which by skilled person's understanding is not essentially functionally contributing to force transmission and/or load carrying may be arranged outside.

As an additional or an alternative option, it is disclosed to arrange the connective element within the rotor blades in an area between 60% to 100% of the chord length of the rotor blade, or in other words, in the last 40% of the chord length. The percentage is measured from the tip of the leading edge located at 0% chord length toward the end of the trailing edge having 100% chord length. In particular, the entire connective element or each of a plurality of a connective element is essentially placed within mentioned area. The term "essentially" refers to structures of the connective element mainly carrying and transferring forces and loads.

Furthermore, the connective element may extend within the rotor blade in longitudinal direction in an area from 10%, in particular from 20%, preferably from 25%, of a blade length of the rotor blade toward the blade tip and/or up to 98%, in particular to 90%, preferably to 80%, more preferably to 70% of a blade length of the rotor blade. The foregoing does not necessarily mean that the connective element or a plurality of connective elements are required to extend from the given starting position of the area up to the ending limit of the area, but the connective element is to be arranged somewhere within the given area. Possibly, a blade root portion of the rotor blade and/or a tip portion of the rotor blades may not be equipped with a connective element, wherein a blade root portion is located in longitudinal direction outside of aforementioned area toward the blade root of the rotor blade, and/or wherein the tip portion is located in longitudinal direction outside of aforementioned area toward the blade tip.

When mounted within the rotor blade, the connective element extends in chordwise direction according to an element length. The element length may be defined as being a distance in chordwise direction between a first shell connection point and a second shell connection point. The first shell connection point is represented by a connective location between the first arm and the first shell support portion. The second shell connection point is defined by a transition between the second arm and the second shell support portion. It is to be noted that the element length is defined between respective connection points having the largest distance in chordwise direction. Thus, if the connection element comprises more than two arms the two connection points of the most outer arms with a shell support portion for further element support define the element length.

In one embodiment, the element length of the connective element varies in longitudinal direction such that the element length and a chord length of the rotor blade are at least partially positively correlating. Hence, the larger the chord length gets, the larger the element length shall be chosen. However, this positive correlation between element length and chord length may be continuous such that - at least partially in certain longitudinal areas of the connective element - the element length is precisely aligned to the chord length, and/or the element length is constantly varying with a variation of the chord length. Alternatively, the positive correlation of element length and chord length may only apply in certain areas, and in particular, may be established in a stepwise and/or discrete manner. In particular, the latter strategy may be applicable if the connective element is formed by a plurality of connective elements, wherein a connective element located in an area having a largest chord length of the rotor blades comprises the largest element length, and wherein additional connective elements having a reduced element length are located in longitudinal direction in areas of the rotor blade having a reduced chord length.

When mounted within the rotor blade, the connective element is positioned with respect to the trailing edge in chordwise direction by establishing a trailing edge distance. The trailing edge distance is measured solely in chordwise direction between the end of the trailing edge (100% chord length) and a center point of the element length.

In further embodiments, the connective element is positioned in chordwise direction within the rotor blade such that a trailing edge distance between the respective connective element and the trailing edge is determined depending to a longitudinal position in longitudinal direction of the respective connective element in the rotor blade. Alternatively, the trailing edge distance at a specific longitudinal position is determined according to a chord length of the rotor blade at the longitudinal position.

According to a specific embodiment, the trailing edge distance varies in longitudinal direction such that a specific trailing edge distance at a specific longitudinal position and a chord length of the rotor blade at the specific longitudinal position are at least partially positively correlating. Hence, the trailing edge distance increases with an increasing chord length and decreases within decreasing chord length. Mentioned positive correlation does not require a continuous and/or proportional correlation, but can also comprise a discrete and/or stepwise correlation.

Optionally, this positive correlation between the trailing edge distance and chord length may be continuous such that - at least partially in certain longitudinal areas of the connective element - the trailing edge distance is precisely aligned to the chord length, and/or the trailing edge distance is constantly varying with a variation of the chord length. Alternatively, the positive correlation of the trailing edge distance and chord length may only apply in certain areas, and in particular may be established in a stepwise and/or discrete manner. In particular the latter strategy may be applicable if the connective element is formed by a plurality of connective elements, wherein a connective element located in an area having a largest chord length of the rotor blades comprises the largest trailing edge distance, and wherein additional connective elements having a reduced element length are located in longitudinal direction in areas of the rotor blade having a reduced chord length.

The alignment of the element length and/or all of the trailing edge distance of the connective element with the chord length enables an optimization of force transmission and/or provides the opportunity to reduce the size of the connective element just according to specific technical requirements.

According to a detailed embodiment, the connective element is placed within the rotor blade in chordwise direction such that, if the connective element arranged somewhere in a longitudinal range between 10% to 50% of a blade length of the rotor blade, the trailing edge distance between the connective element and the trailing edge does not exceed 25% and/or is not less than 15% of a respective chord length.

Additionally or alternatively, if the connective element is placed somewhere in a longitudinal range between 50% to 70% of a blade length of the rotor blade, a trailing edge distance between the connective element and the trailing edge does not exceed 20% and/or is not less than 10% of a respective chord length.

Further additionally or alternatively, if the connective element is arranged somewhere in a longitudinal range between 70% to 90% of a blade length of the rotor blade, a trailing edge distance between the respective connective element and the trailing edge does not exceed 15% and/or is not less than 5% of a respective chord length.

According to an embodiment, the connective element is configured such that a maximum height of the connective element in a non-mounted state of the connective element is larger than a maximum height of the connective element when mounted at its designated location between the first shell and second shell. The respective maximum height is measured exclusively in profile direction between the first shell connection point and the element support portion or between the second shell connection point and the element support portion. In order to measure a maximum height in a non-mounted state the element support portion is placed flat on a measuring surface, wherein the respective maximum height is measured perpendicularly with respect to the measuring surface between the first shell connection point and the measuring surface or between the second shell connection point and the measuring surface. A comparison between measurements in mounted state with measurements in a non-mounted state refer to measurements being conducted at the same and/or comparable locations.

When arranging the connective element between the first shell and the second shell the connective element is pressed together by the enclosing first shell and second shell. This causes normal forces between the connective element and the first shell at the first shell connection and at the second shell connection, and between the second shell and the connective element at the element connection. Optionally, if applicable, normal forces are also generated at further connections between a further shell support or a further element support portion and a respective rotor blade shell.

Additionally or alternatively, it should be understood that the connective element may have a flexible structure such that the connective element may adapt its form to an inner shape of the rotor blade at the respective location of arrangement. In particular, a flexibility of a material of the connective element is chosen such that normal forces are established if the connective element is arranged between the first shell and the second shell. In particular, normal forces are established between the connective element and the respective rotor blade shell at the first shell connection, at the second shell connection, and at the element connection, optionally, also at further connections between a further shell support or a further element support portion and a respective rotor blade shell.

The connective element is configured such, in particular with respect to its flexibility and/or with respect to its shape, that the connective element maintains its position with respect to the rotor blade when the connective element is pressed together by the first shell and the second shell during manufacturing.

In particular, the connective element is configured such that a position of the element support portion on the inner surface of the second rotor blade shell remains unchanged when being pressed between the first shell and the second shell, specifically in chordwise direction. For example, a size of the first shell support portion, of the first arm, of the element support portion, of the second arm, of the second support portion, and/or of a further support portion and/or of a further arm, and a respective material (stiffness) is carefully elaborated such that an adequate balance of normal forces is achieved in order to avoid tilting of the connective element during manufacturing. By choosing dimensions of the connective element accordingly, it is avoided that a portion of the element support portion, in particular excluding a central, bending portion of the element support portion, is partially lifting from an inner surface the second shell.

Alternatively or additionally, the design of the connective element is chosen such that forces do not result in a tilting by applying a balancing process in accordance to balancing a seesaw. For example, when the connective element does not comprise more than two arms, two shell support portions, and not more than one single element support portion connecting the two arms, the dimensions of these portions of the connective element are chosen such that forces applied during manufacturing do not result in a tilting by applying a balancing process in accordance to balancing a seesaw.

Possibly, an adhesive is chosen in accordance to aforementioned target such that the connective element does not experience a translation in chordwise direction during manufacturing. For example, an adhesive is chosen such that a force in chordwise direction, caused by pressing together the connective element and by a wedge-form of the inner surfaces rotor blade in the trailing edge area, does not exceed a respective counterforce caused by the adhesive. This should in particular apply even if the adhesive is not hardened and/or cured.

In further embodiments, the first shell and/or the second shell comprise(s) at least one sandwich structure portion having an outer skin laminate, an inner skin laminate, and a core material enclosed by the outer skin laminate. Furthermore, the first shell and/or the second shell comprise(s) at least one monolithic portion having an outer skin laminate and not having a core material. In particular, the monolithic portion may be formed solely by the inner skin laminate and by the outer skin laminate without enclosing a core material.

Possibly, the first shell and/or the second shell have a plurality of sandwich portions and a plurality of monolithic portions. For example, a monolithic portion may be present in an area of the leading edge and/or in the trailing edge area an area. Additionally or alternatively, a monolithic portion may be in an area of a main support structure. This would also apply if a spar cap is to be enclosed between the outer skin laminate and the inner skin laminate since the spar cap is by definition not to be understood as part of the first shell or of the second shell, but as being a part of the main support structure. Consequently, a structure comprising a spar cap enclosed by the outer skin laminate and the inner the skin laminate must not be understood as a sandwich structure potion in the sense of the present disclosure.

According to an embodiment, the first shell connection, the second shell connection, and/or the element connection is/are positioned at a monolithic portion, and in particular not at a sandwich structure portion. Alternatively, the first shell and/or the second shell are configured such that at a respective location of the first shell connection, the second shell connection, and/or the element connection usually a monolithic portion, and in particular no sandwich structure portion, is provided. This causes a further reduction of costs since the amount of core material is reduced.

In additional embodiments, at least one monolithic portion is provided at least at a respective location of the first shell connection, of the second shell connection, and/or of the element connection. In particular the respective monolithic portion(s) is/are configured such that a respective thickness of the first shell and/or all of the second shell amounts to at least 8 mm, in particular to at least 10 mm, preferably to at least 12 mm and/or does not exceed 22 mm, in particular does not exceed 20 mm, preferably does not exceed 18 mm.

In an alternative or additional embodiment, the element support portion comprises an element bridge, in particular wherein the element bridge is configured for not being part of the element connection. Specifically, the element connection is formed by a first element connection and by a second element connection which are connected by the element bridge. By this, an isostatic contact between the connective element and the second blade shell can be established.

A further embodiment discloses, that the connective element is configured such that the first shell support portion, the second shell support portion, and/or the element support portion is/are extending essentially parallel to a respective inner surface of the first shell or of the second shell. This specifically applies, when the connective element is mounted at its designated location between the first shell and second shell the first shell support portion. By this, the contact surfaces between the connective element and the respective inner surface of the first shell and/or of the second shell is maximized, and a force conduction is optimized.

According to a more specifying embodiment, the connective element is designed such that the first shell support portion, the second shell support portion, and/or the element support portion is/are having an effective length of at least 1%, in particular at least 1.5%, preferably at least 2%, of the chord length, and/or having an effective length not exceeding 5%, in particular not exceeding 4%, of the chord length.

According to an embodiment, the connective element comprises reinforced fiber material, in particular formed by using raw fiber material infused with resin, and preferably pre-manufactured in a mold. The form of the connective element may be adapted to the shape of the rotor blade. According to an embodiment the connective layer comprises a biaxial raw fiber material, wherein the angular arrangement of the respective sub- layer of the raw fiber material varies from +/-80° to +/-40°. Possibly, the connective element comprises at least one layer of a +/- 45°-biaxial and/or a +/-60°-biaxial raw fiber material.

In yet another aspect, the present disclosure is directed to a wind turbine. The wind turbine comprises a tower, a nacelle rotatably mounted to the tower, and a rotor being rotatably supported by the nacelle, wherein the rotor comprises a hub and at least one rotor blade. The rotor blade is comprising a first shell and a second shell, forming a first aerodynamic surface, a second aerodynamic surface, a trailing edge, and a leading edge. Furthermore, the rotor blade has at least one connective element having at least a first shell support portion, a second shell support portion, and an element support portion, wherein the first shell support portion is connected to the element support portion by a first arm, wherein the second shell support portion is connected to the element support portion by a second arm. The connective element is arranged, mounted, and/or attached between the first shell and the second shell by a first shell connection being effective between the first shell support portion and the first shell, by a second shell connection being effective between the second shell support portion and the first shell, and by an element connection being effective between the element support portion and the second shell. The rotor blade is configured according to one or a plurality of the embodiments of the present disclosure.

According to a further aspect, the present disclosure is directed to a method according to the independent method claim 13.

A method for manufacturing a rotor blade according to one or to a plurality of the preceding embodiments comprises the steps: positioning of the element support portion on an inner surface of the second shell; and placing, and in particular connecting, the first shell and the second shell. Due to the over-size of the connective element and profile direction in the non-mounted state, the connective element is pressed together when the first shell and the second shell are placed onto each other. In connection with the flexibility and the compression by deformation of the connective element normal forces are generated between the connective element and the first shell and between the connective element and the second shell.

Possibly, adhesive is placed on a surface of the first shell support portion and on a surface of the second shell support portion, wherein the respective surfaces are intended to adjoin an inner surface of the first shell.

Alternatively, adhesive might be placed to an appropriate location on an inner surface of the second shell, wherein an appropriate location is determined to get in contact with the surface of the first shell support portion and with the surface of the second shell support portion when the first shell and the second shell are placed onto each other.

According to a possible embodiment, the step of positioning of the element support portion comprises firmly establishing the element connection prior to connecting the first shell and the second shell. By this it is avoided that the connective element moves out of the intended position when the first shell and the second shell are placed onto each other. In this context, the term "firmly establishing the element connection" is to be understood such, that connective element cannot be pushed out of its intended position by forces applied during manufacturing. In particular, said term does not necessarily require that a final strength and/or hardness of the element connection is to be established.

These and other features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine having a rotor blade according to the present disclosure;
FIG. 2 illustrates a simplified, internal view of one embodiment of a nacelle of a wind turbine according to the present disclosure, particularly illustrating the nacelle during normal operation;
FIG. 3 illustrates a sectional view at an inner (first) longitudinal position through the rotor blade of the wind turbine according to FIG. 1, wherein the rotor blade comprises a connective element according to a first embodiment;
FIG. 4 is an enlarged sectional view through a trailing edge area of the rotor blade according to FIG. 3;
FIG. 5 illustrates a sectional view at an outer (second) longitudinal position through a trailing edge area of the rotor blade of the wind turbine according to FIG. 1, wherein the rotor blade comprises a connective element according to a second embodiment; and
FIG. 6 is a schematic representation of the connective element according to the first embodiment.

Single features depicted in the figures are shown relatively with regards to each other and therefore are not necessarily to scale. Similar or same elements in the figures, even if displayed in different embodiments, are represented with the same reference numbers

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the present invention which is defined by the appended claims.

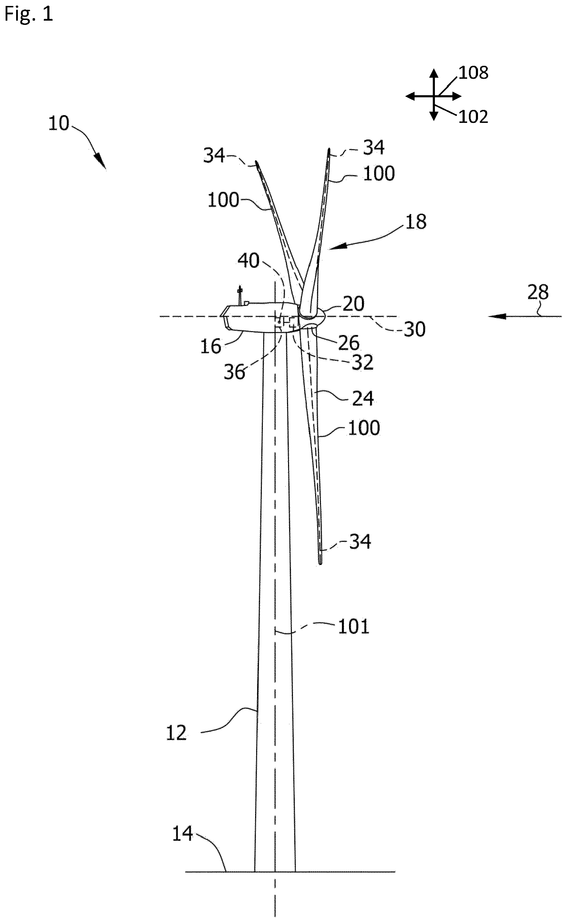

FIG. 1 is a perspective view of an exemplary wind turbine 10. In the exemplary embodiment, the wind turbine 10 is a horizontal-axis wind turbine. Alternatively, the wind turbine 10 may be a vertical-axis wind turbine. In the exemplary embodiment, the wind turbine 10 includes a tower 12 that extends from a support system 14, a nacelle 16 mounted on tower 12, and a rotor 18 that is coupled to nacelle 16. The rotor 18 includes a rotatable hub 20 and at least one rotor blade 100 coupled to and extending outward from the hub 20. In the exemplary embodiment, the rotor 18 has three rotor blades 100. In an alternative embodiment, the rotor 18 includes more or less than three rotor blades 100. In the exemplary embodiment, the tower 12 is fabricated from tubular steel to define a cavity (not shown in FIG. 1) between a support system 14 and the nacelle 16. In an alternative embodiment, the tower 12 is any suitable type of a tower having any suitable height.

The rotor blades 100 are spaced about the hub 20 to facilitate rotating the rotor 18 to enable kinetic energy to be transferred from the wind into usable mechanical energy, and subsequently, electrical energy. The rotor blades 100 are mated to the hub 20 by coupling a blade root portion 24 to the hub 20 at a plurality of load transfer regions 26. The load transfer regions 26 may have a hub load transfer region and a blade load transfer region (both not shown in FIG. 1). Loads induced to the rotor blades 100 are transferred to the hub 20 via the load transfer regions 26.

In one embodiment, the rotor blades 100 have a length 101 ranging from about 15 meters (m) to about 91 m. Alternatively, rotor blades 100 may have any suitable length 101 that enables the wind turbine 10 to function as described herein. For example, other non-limiting examples of blade lengths include 20 m or less, 37 m, 48.7 m, 50.2 m, 52.2 m or a length that is greater than 91 m. As wind strikes the rotor blades 100 from a wind direction 28, the rotor 18 is rotated about an axis of rotation 30. As the rotor blades 100 are rotated and subjected to centrifugal forces, the rotor blades 100 are also subjected to various forces and moments. As such, the rotor blades 100 may deflect and/or rotate from a neutral, or non-deflected, position to a deflected position.

Moreover, a pitch angle of the rotor blades 100, i.e., an angle that determines a perspective of the rotor blades 100 with respect to the wind direction, may be changed by a pitch system 32 to control the load and power generated by the wind turbine 10 by adjusting an angular position of at least one rotor blade 100 relative to wind vectors. Pitch axes 34 of rotor blades 100 are shown. During operation of the wind turbine 10, the pitch system 32 may change a pitch angle of the rotor blades 100 such that the rotor blades 100 are moved to a feathered position, such that the perspective of at least one rotor blade 100 relative to wind vectors provides a minimal surface area of the rotor blade 100 to be oriented towards the wind vectors, which facilitates reducing a rotational speed and/or facilitates a stall of the rotor 18.

In the exemplary embodiment, a blade pitch of each rotor blade 100 is controlled individually by a wind turbine controller 36 or by a pitch control system 80. Alternatively, the blade pitch for all rotor blades 100 may be controlled simultaneously by said control systems.

Further, in the exemplary embodiment, as the wind direction 28 changes, a yaw direction of the nacelle 16 may be rotated about a yaw axis 38 to position the rotor blades 100 with respect to wind direction 28.

In the exemplary embodiment, the wind turbine controller 36 is shown as being centralized within the nacelle 16, however, the wind turbine controller 36 may be a distributed system throughout the wind turbine 10, on the support system 14, within a wind farm, and/or at a remote control center. The wind turbine controller 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

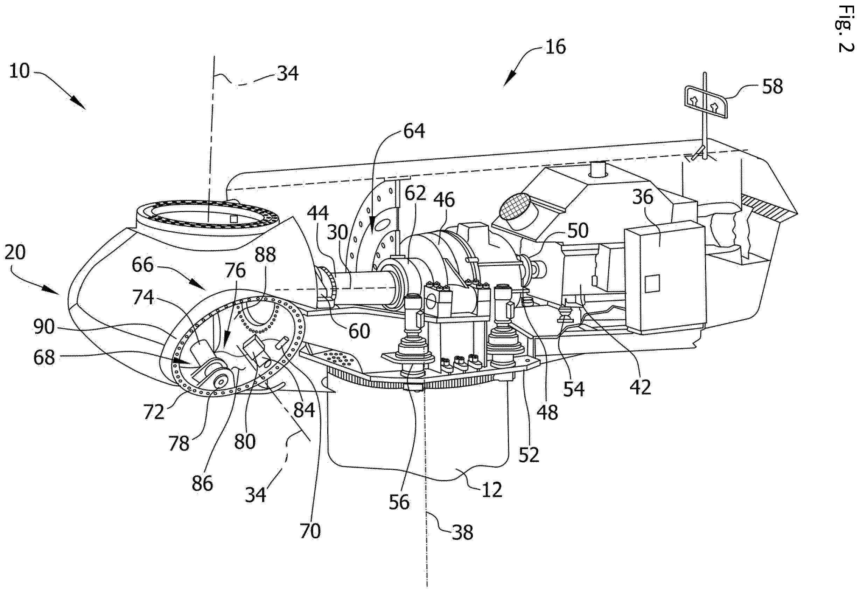

FIG. 2 is an enlarged sectional view of a portion of the wind turbine 10. In the exemplary embodiment, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high speed shaft 48, and a coupling 50. In the exemplary embodiment, the main shaft 44 is disposed at least partially coaxial to a longitudinal axis (not shown) of the nacelle 16. A rotation of the main shaft 44 drives the gearbox 46 that subsequently drives the high speed shaft 48 by translating the relatively slow rotational movement of the rotor 18 and of the main shaft 44 into a relatively fast rotational movement of the high speed shaft 48. The latter is connected to the generator 42 for generating electrical energy with the help of a coupling 50.

The gearbox 46 and generator 42 may be supported by a main support structure frame of the nacelle 16, optionally embodied as a main frame 52. The gearbox 46 may include a gearbox housing that is connected to the main frame 52 by one or more torque arms 103. In the exemplary embodiment, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Preferably, the main frame 52 is configured to carry the entire load caused by the weight of the rotor 18 and components of the nacelle 16 and by the wind and rotational loads, and furthermore, to introduce these loads into the tower 12 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

However, the present disclosure is not limited to a rotor blade for wind turbines comprising a gearbox, but also wind turbines without a gearbox, thus, heading a so-called direct drive may be concerned as well.

The nacelle 16 also may include a yaw drive mechanism 56 that may be used to rotate the nacelle 16 and thereby also the rotor 18 about the yaw axis 38 to control the perspective of the rotor blades 100 with respect to the wind direction 28.

For positioning the nacelle appropriately with respect to the wind direction 28, the nacelle 16 may also include at least one meteorological mast 58 that may include a wind vane and anemometer (neither shown in FIG. 2). The mast 58 provides information to the wind turbine controller 36 that may include wind direction and/or wind speed.

In the exemplary embodiment, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 100 (shown in FIG. 1) for modulating the pitch angel of a rotor blade 100 along the pitch axis 34. Only one of three pitch drive systems 68 is shown in FIG. 2.

In the exemplary embodiment, the pitch assembly 66 includes at least one pitch bearing 72 coupled to hub 20 and to a respective rotor blade 100 (shown in FIG. 1) for rotating the respective rotor blade 100 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 100 upon receipt of one or more signals from the wind turbine controller 36. In the exemplary embodiment, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servo-mechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 also includes one or more pitch control systems 80 for controlling the pitch drive system 68 according to control signals from the wind turbine controller 36, in case of specific prioritized situations and/or during rotor 18 overspeed. In the exemplary embodiment, the pitch assembly 66 includes at least one pitch control system 80 communicatively coupled to a respective pitch drive system 68 for controlling pitch drive system 68 independently from the wind turbine controller 36. In the exemplary embodiment, the pitch control system 80 is coupled to the pitch drive system 68 and to a sensor 70. During normal operation of the wind turbine 10, the wind turbine controller 36 controls the pitch drive system 68 to adjust a pitch angle of rotor blades 100.

In one embodiment, in particular when the rotor 18 operates at rotor overspeed, the pitch control system 80 overrides the wind turbine controller 36, such that the wind turbine controller 36 no longer controls the pitch control system 80 and the pitch drive system 68. Thus, the pitch control system 80 is able to make the pitch drive system 68 to move the rotor blade 100 to a feathered position for reducing a rotational speed of the rotor 18.

According to an embodiment, a power generator 84, for example comprising a battery and/or electric capacitors, is arranged at or within the hub 20 and is coupled to the sensor 70, the pitch control system 80, and to the pitch drive system 68 to provide a source of power to these components. In the exemplary embodiment, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the exemplary embodiment, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer surface 90 of hub 20 and may be coupled, directly or indirectly, to outer surface 90.

A rotor blade 100 as shown in FIG. 1 has a blade length 101 to be measured from a blade root at a blade portion 24 of the rotor blade 100 up to a blade tip 103, thereby defining a longitudinal direction 102. The longitudinal direction 102 may vary along the blade length 101, for example in case of a curved rotor blade. The rotor blade may be structured in chordwise direction in a leading edge area 119, in a central area and in a trailing edge area 118. In chordwise direction, the central area reaches up to 60% of chord length 104, wherein the trailing edge area 118 extends from 60% chord length to 100% chord length.

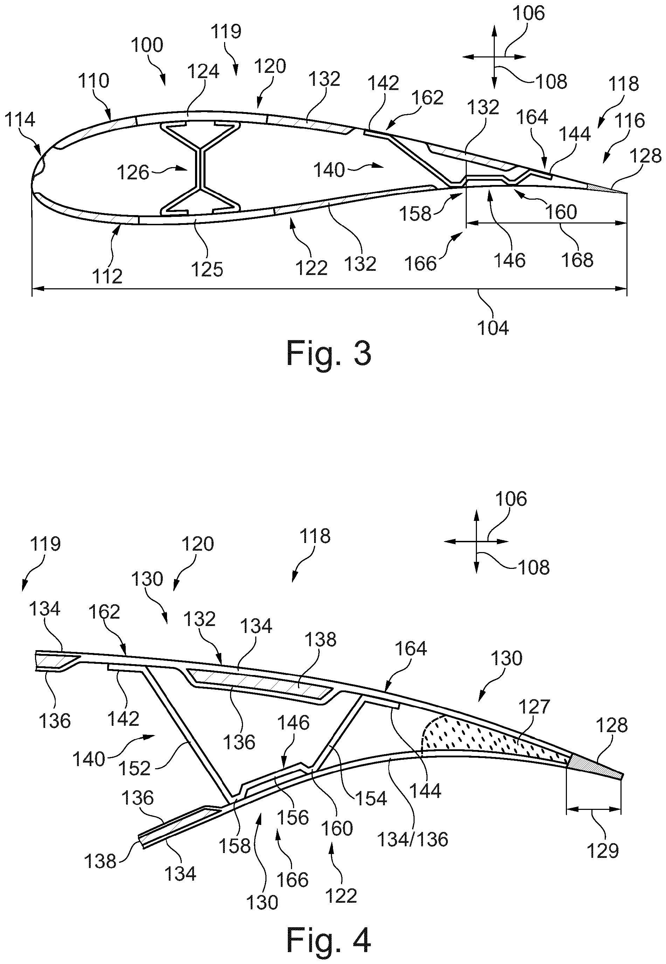

FIG. 3 represents a sectional view through the rotor blade 100 and reflects an aerodynamic profile of the rotor blade 100. The aerodynamic profile is formed by a first aerodynamic surface 110 and by a second aerodynamic surface 112, which are connected in upstream direction with each other at the leading edge 114 and in downstream direction with each other at the trailing edge 116. When placed into an airstream, the aerodynamic profile generates lift by establishing a suction side and a pressure side.

Perpendicular to the longitudinal direction 102, the rotor blade 100 establishes a chord length 104 measured from the trailing edge 114 to the leading edge 116, thereby defining a chordwise direction 106. The rotor blade 100 has a profile direction 108 extending essentially perpendicular to the chordwise direction 106 and essentially to the longitudinal direction 102. A profile plane of the aerodynamic profile may be defined by the chordwise direction 106 and the profile direction 108.

Structurally the aerodynamic profile is formed by a first shell 120 of the rotor blade 100 and of a second shell 122 of the rotor blade 100, wherein during manufacturing, the first shell 120 and the second shell 122 are arranged on top of each other, wherein a respective inner surface of the first shell 120 is facing an inner surface of the second shell 122. The first shell 120 and the second shell 122 are connected to each other at the leading edge 114 and at the trailing edge 116.

Optionally, the rotor blade 100 may comprise a main support structure, mainly for providing strength against bending and/or twist in a flap wise direction of the rotor blade 100. According to the present embodiment, the main support structure comprises a first spar cap 124 (first bending support structure) being arranged with the first shell 120 and a second spar cap 125 (second bending support structure) being arranged with the second shell 122. The spar cap 124, 125 are arranged within a structure of the respective rotor blade shell 120, 122, however, by definition, a spar cap 124, 125 does not structurally to the respective rotor blade shell 120, 122 even though that the spar cap 124, 125 is covered by an outer skin laminate 134 of the respective rotor blade shell 120, 122 and by an inner skin laminate 136 of the respective rotor blade shell 120, 122. In fact, regardless that respective spar cap 124, 125 is sandwiched by the outer skin laminate 134 and the inner skin laminate 136, by definition, such portion of the respective rotor blade shell 120, 122 must not be conveyed as a sandwich structure portion 132 according to the present disclosure.

The first shell 120 and/or the second shell 122 is formed by a plurality of layers of a reinforced fiber material. For example, the first shell 120 and/or the second shell 122 have an outer skin laminate 134 and an inner skin laminate 136, each at least comprising one or two layers of a fiber material bonded together in a matrix with a cured resin. The fiber material can be a unidirectional 0° raw material, a biaxial raw material, for example a +/-45° fiber material, and/or a triaxial -45°/0°/+45° raw material, wherein angles as provided may refer to the longitudinal direction 102.

According to the present embodiment, but not limited to it, the first shell 120 and/or the second shell 122 may comprise at least a monolithic portion 130 and a sandwich structure portion 132. A sandwich structure portion 132 is defined as such that it has at least an outer skin laminate 134 and an inner skin laminate 136, wherein both skin laminates 134, 136 enclose a core material 138. In contrast, the monolithic portion 130 does not comprise a core material 138, and may comprise exclusively the outer skin laminate 134 and the inner skin laminate 136. The combination of the outer skin laminate 134 and inner skin laminate 136 may also be understood as one single laminate. Additionally or alternatively, a shell of the rotor blade 100 may exclusively have the outer skin laminate 134.

Possibly, the main support structure may comprise a shear web 126 for supporting the first shell 120 with respect to the second shell 122 by connecting both rotor blade shells 120, 122 with each other. In particular, the shear web 126 is connected to the first spar cap 124 and to the second spar cap 125. Hence, the shear web 126 is indirectly connected to the respective spar cap 124, 125 such that the inner skin laminate 136 may be arranged between the shear web 126 and the respective spar cap 124, 125.

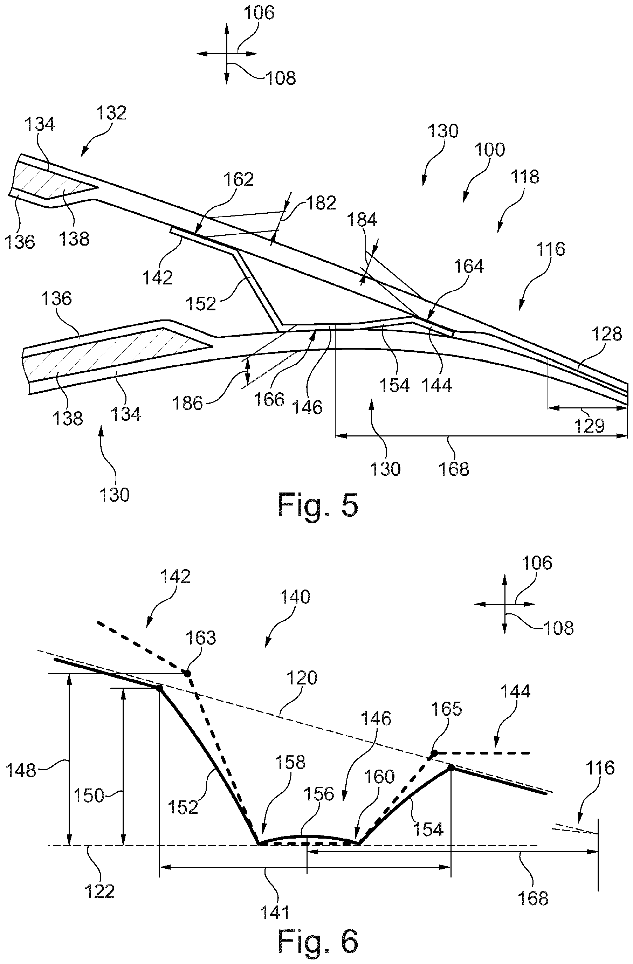

FIG. 3, FIG. 4 and FIG. 5 depict an arrangement of a connective element 140 in the trailing edge area 118 of the rotor blade 100, wherein FIG. 3 and FIG. 4 show the same, large connective element 140 according to a first embodiment, and wherein FIG. 5 introduces a relatively small connective element 140 according to a second embodiment. FIG. 6 is a schematic picture of a connective element 140 according to the first embodiment, wherein basic principles of the connective element 140 according to the first embodiment also apply to the connective element 140 according to the second embodiment.

Additionally to a possible main support structure of the rotor blade 100, the connective element 140 is forming a structural connection between the first shell 120 and the second shell 122. Furthermore, the first shell 120 is additionally bonded to the second shell 122 by a trailing edge connection 128.

The sectional views according to FIG. 3 and FIG. 4 are located in longitudinal direction 102 in a blade root portion 124 or in a central portion 105 of the rotor blade 100, wherein the sectional representation of the rotor blade 100 according to FIG. 5 is taken in a tip area of blade tip 103 of the rotor blade 100. Specifically, compared to a profile in the tip portion, a profile in the blade root portion 124 or in a central portion 105 is relatively large by having a relatively large chord length 104 and blade height. Generally, a profile in the blade root portion 124, specifically in the central portion 105, is much larger and thicker than a profile in the tip area near blade tip 103. For that reason, the connective element 140 according to the first embodiment is larger than the connective element 140 according to the second embodiment, and furthermore, a location of the respective connective element 140 in chordwise direction 106 is different.

The connective element 140 has a worm-like shape when observed in the profile plane, comprising a first shell support portion 142, a second shell support portion 144, an element support portion 146, a first arm 152 connecting the first shell support portion 142 and the element support portion 146, and a second arm 154 connecting the second shell support portion 144 and the element support portion 146.

When the connective element 140 is arranged within the rotor blade 100, the first shell support portion 142 is abutting an inner surface of the first shell 120, and thereby forming a first shell connection 162. The second shell support portion 144 is supporting the inner surface of the first shell 120, and thereby forming a second shell connection 164. Furthermore, the element support portion 146 is connected to and supported by an inner surface of the second shell 122, and thereby informing an element connection 166. Hence, by establishing the first shell connection 162, the second shell connection 164, and the element connection 166, the connective element 140 is arranged within the rotor blade 100 and forming a load carrying structure in the trailing edge area 118 of the rotor blade 100.

According to the first embodiment of the connective element 140, the element support portion 146 forming the element connection 166 is embodied as having an element bridge 156 enabling the element connection 166 being realized by a first element connection 158 and by a second element connection 166. In fact, adhesive or resin is primarily arranged at the ends of the element bridge 156 such that essentially only the first element connection 158 and by a second element connection 166 form the connection between the connective element 140 and the second shell 122. In particular, a central portion of the element bridge 156 does not contribute to the element connection 166.

As shown in FIG. 6, an element length 141 of the connective element 140 extending in chordwise direction 106 can be determined between a first shell connection point 163 and a second shell connection point 165. The first shell connection point 163 is defined between the first shell support portion 142 and the first arm 152, wherein the second shell connection point 165 is defined between the second arm 154 and second shell support portion 144.

As shown in FIG. 6, a trailing edge distance 168 is extending in chordwise direction is to be measured between the tip of the trailing edge 116 and a center line of the element length 141.

FIG. 6 explains that a shape of the connective element 140 in a non-mounted state varies from a shape of the connective element 140 in a mounted state such that a maximum height 148 (non-mounted) is larger than a maximum height 150 (mounted). Therefore, the connective element 140 is capable of absorbing and overcoming height tolerances between the first shell 120 and second shell 122, in turn leading to close fitting connections, and thus less adhesive usage and generally stronger and more rigid connections.

With the help of FIG. 4 the benefit of the present disclosure becomes apparent. With the reference number 127 an area of adhesive shall be represented which would be necessary for providing sufficient strength to the trailing edge 116 if no connective element 140 was arranged between the first shell 120 and second shell 122 in the trailing edge area 118. By providing the connective element 140 a trailing edge connection 128 of the trailing edge 116 can have a reduced trailing edge connection size 129 (FIG. 4, FIG. 5).

According to both embodiments (FIG. 3 to FIG. 6), the respective connective element 140 is connected to the first shell 120 and to the second shell 122 only, exclusively, at a monolithic portion 130. Specifically, the first shell 120 at a location of the first shell connection 162 and of the second shell connection 164 does not comprise a sandwich structure, but is part of a monolithic portion 130. The second shell 122 at a position of the element connection 166 - in particular at the first element connection 158 and the second element connection 160 - is a part of a monolithic portion 130.

According to the embodiment of FIG. 3 and FIG. 4, but not limited to it, a sandwich structure portion 132 may be arranged in chordwise direction 106 between the first shell connection 162 and the second shell connection 164.

Alternatively or additionally, a thickness 182 of the first shell 120 at a location of the first shell connection 162, at a thickness 184 at a location of the first shell 120 at a location of the second shell connection 164, and/or a thickness 186 of the second shell 122 at a location of the element connection 166 amounts to at least 8 mm, in particular to at least 10 mm, preferably to at least 12 mm and/or does not exceed 22 mm, in particular does not exceed 20 mm, preferably does not exceed 18 mm.

This written description uses examples to disclose the invention, including the best mode, and also to enable any person skilled in the art to practice the invention, including making and using any devices or systems and performing any incorporated methods. The patentable scope of the invention is defined by the appended claims.

### REFERENCE NUMBERS

| | | | |
|---|---|---|---|
| 10 | wind turbine | 100 | rotor blade |
| 12 | tower | 101 | Blade length |
| 14 | support system | 102 | longitudinal direction |
| 16 | nacelle | 103 | Blade tip |
| 18 | rotor | 104 | chord length |
| 20 | rotatable hub | 105 | Central portion |
| 24 | blade root portion | 106 | chordwise direction |
| 26 | load transfer regions | 108 | profile direction |
| 28 | wind direction | 110 | first aerodynamic surface |
| 30 | axis of rotation | 112 | second aerodynamic surface |
| 32 | pitch system | 114 | leading edge |
| 34 | pitch axes | 116 | trailing edge |
| 36 | controller | 118 | trailing edge area |
| 38 | yaw axis | 119 | central area |
| 40 | processor | 120 | first shell |
| 42 | electric generator | 122 | second shell |
| 44 | main shaft | 124 | First spar cap |
| 46 | gearbox | 125 | Second spar cap |
| 48 | high speed shaft | 126 | shear web |
| 50 | coupling | 127 | Avoided trailing edge connection |
| 52 | main frame | 128 | trailing edge connection |
| 54 | decoupling support means | 129 | Trailing edge connection size |
| 56 | yaw drive mechanism | 130 | monolithic portion |
| 58 | meteorological mast | 132 | sandwich structure portion |
| 60 | forward support bearing | 134 | outer skin laminate |
| 62 | aft support bearing | 136 | inner skin laminate |
| 64 | drive train | 138 | core material |
| 66 | pitch assembly | 140 | connective element |
| 68 | pitch drive system | 141 | Element length |
| 70 | sensor | 142 | first shell support portion |
| 72 | pitch bearing | 144 | second shell support portion |
| 74 | pitch drive motor | 146 | element support portion |
| 76 | pitch drive gearbox | 148 | maximum height (non-mounted) |
| 78 | pitch drive pinion | 150 | maximum height (mounted) |
| 80 | pitch control system | 152 | first arm |
| 84 | power generator | 154 | second arm |
| 86 | cavity | 156 | element bridge |
| 88 | inner surface | 158 | first element connection |
| 90 | outer surface | 160 | second element connection |
| | | 162 | first shell connection |
| | | 163 | First Shell connection point |
| | | 164 | second shell connection |
| | | 165 | 2^{nd} shell connection point |
| | | 166 | element connection |
| | | 168 | Trailing edge distance |
| | | 182 | thickness |
| | | 184 | thickness |
| | | 186 | thickness |

## Claims

1. A rotor blade (100) comprising:
- a first shell (120) and a second shell (122), forming a first aerodynamic surface (110), a second aerodynamic surface (112), a trailing edge (116), and a leading edge (114);
- at least one main support structure for increasing the bending stiffness of the rotor blade (100), wherein the main support structure is arranged in a central area (119) of the rotor blade (100) and is connected to the first shell (120) and to the second shell (122);
- at least one connective element (140) having at least a first shell support portion (142), a second shell support portion (144), and an element support portion (146),
- wherein the connective element (140) is arranged between the main support structure and the trailing edge (116) of the rotor blade (100),
- wherein the first shell support portion (142) is connected to the element support portion (146) by a first arm (152),
- wherein the second shell support portion (144) is connected to the element support portion (146) by a second arm (154),
- wherein the connective element (140) is arranged between the first shell (120) and the second shell (122)
- by a first shell connection (162) between the first shell support portion (142) and the first shell (120),
- by a second shell connection (164) between the second shell support portion (144) and the first shell (120), and
- by an element connection (166, 158, 160) between the element support portion (146) and the second shell (122).

2. The rotor blade (100) according to claim 1,
- wherein the connective element (140) is exclusively arranged in a trailing edge area (118) of the rotor blade (100), and/or
- wherein the connective element (140) is exclusively arranged within the rotor blade (100) in chordwise direction (106) between 60% to 100 % of a chord length (104) of the rotor blade (100).

3. The rotor blade (100) according to one of the preceding claims, wherein the connective element (140) is extending within the rotor blade (100) in the longitudinal direction (102) in an area from 10%, in particular from 20%, preferably from 25%, of a blade length (101) of the rotor blade (100) toward the blade tip (103) and/or up to 98%, in particular to 90%, preferably to 80%, more preferably to 70% of a blade length (101) of the rotor blade (100).

4. The rotor blade (100) according to one of the preceding claims, wherein an element length (141) of the connective element (140) varies in longitudinal direction (102) such that the element length (141) and a chord length (104) of the rotor blade (100) are at least partially positively correlating.

5. The rotor blade (100) according to one of the preceding claims, wherein the connective element (140) is positioned in chordwise direction (106) within the rotor blade (100) such that a trailing edge distance (168) between the respective connective element (140) and the trailing edge (116) is determined according to a longitudinal position in longitudinal direction (102) of the respective connective element (140) and/or according to a chord length (104) of the rotor blade (100).

6. The rotor blade (100) according to claim 5, wherein the trailing edge distance (168) varies in longitudinal direction (102) such that the trailing edge distance (168) and a chord length (104) of the rotor blade (100) are at least partially positively correlating.

7. The rotor blade (100) according to claim 5 or 6, wherein the connective element (140) is positioned such in chordwise direction (106) within the rotor blade (100) that,
- if arranged in a longitudinal range between 10% to 50% of a blade length (101) of the rotor blade (100), the trailing edge distance (168) between the connective element (140) and the trailing edge (116) does not exceed 25% and/or is not less than 15% of a respective chord length (106),
- if arranged in a longitudinal range between 50% to 70% of a blade length (101) of the rotor blade (100), a trailing edge distance (168) between the connective element (140) and the trailing edge (116) does not exceed 20% and/or is not less than 10% of a respective chord length (106), and/or
- if arranged in a longitudinal range between 70% to 90% of a blade length (101) of the rotor blade (100), a trailing edge distance (168) between the respective connective element (140) and the trailing edge (116) does not exceed 15% and/or is not less than 5% of a respective chord length (106).

8. The rotor blade (100) according to one of the preceding claims, wherein the connective element (140) is configured such that a maximum height (148) of the connective element (140) in a non-mounted state of the connective element (140) is larger than a maximum height (150) of the connective element (140) when mounted at its designated location between the first shell (120) and second shell (122).

9. The rotor blade (100) according to claim 8, wherein the connective element (140) has a flexible structure, which is configured to cancel a rotational moment along a longitudinal axis of the connective element (140) during manufacturing of the rotor blade (100), so that an undesired change of position of the connective element is prevented.

10. The rotor blade (100) according to one of the preceding claims,
- wherein the first shell (120) and/or the second shell (122) comprise(s) at least one sandwich structure portion having an outer skin laminate (134), an inner skin laminate (136), and a core material (138) enclosed by the outer skin laminate (134) and the inner skin laminate (136) thereby forming a sandwich structure portion (132), and at least one monolithic portion (130) having an outer skin laminate (134) and not having a core material,
- wherein the first shell connection (162), the second shell connection (164), and/or the element connection (166) is/are positioned at a monolithic portion (130), and in particular not at a sandwich structure portion.

11. The rotor blade (100) according to one of the preceding claims, wherein the element support portion (146) comprises an element bridge (156) enabling the element connection (166) being embodied as a first element connection (158) and a second element connection (160), both being connected by the element bridge (156).

12. A wind turbine (10) comprising a tower (12), a nacelle (16) rotatably mounted to the tower (12), and a rotor (18) being rotatably supported by the nacelle (16), wherein the rotor (18) comprises a hub (20) and at least one rotor blade (100) according to one of the preceding claims.

13. A method for manufacturing a rotor blade (100) according to one of claims 1 to 11, the method comprising the steps:
- positioning of the element support portion (146) on an inner surface of the second shell (122); and
- connecting the first shell (120) and the second shell (122), and in particular
- placing adhesive on a surface of the first shell support portion (142) and on a surface of the second shell support portion (144), wherein the respective surfaces are intended to adjoin an inner surface of the first shell (120).

14. The method for manufacturing a rotor blade (100) according to claim 13, wherein the step of positioning of the element support portion (146) comprises firmly establishing the element connection (166) prior to connecting the first shell (120) and the second shell (122).

## Patentansprüche

1. Rotorblatt (100), umfassend:
- eine erste Schale (120) und eine zweite Schale (122), die eine erste aerodynamische Oberfläche (110), eine zweite aerodynamische Oberfläche (112), eine Hinterkante (116) und eine Vorderkante (114) bilden;
- mindestens eine Hauptstützstruktur zur Erhöhung der Biegesteifigkeit des Rotorblatts (100), wobei die Hauptstützstruktur in einem zentralen Bereich (119) des Rotorblatts (100) angeordnet ist und mit der ersten Schale (120) und der zweiten Schale (122) verbunden ist;
- mindestens ein Verbindungselement (140) mit mindestens einem ersten Schalenstützteil (142), einem zweiten Schalenstützteil (144) und einem Elementstützteil (146),
- wobei das Verbindungselement (140) zwischen der Hauptstützstruktur und der Hinterkante (116) des Rotorblatts (100) angeordnet ist,
- wobei der erste Schalenstützteil (142) mit dem Elementstützteil (146) durch einen ersten Arm (152) verbunden ist,
- wobei der zweite Schalenstützteil (144) mit dem Elementstützteil (146) durch einen zweiten Arm (154) verbunden ist,
- wobei das Verbindungselement (140) zwischen der ersten Schale (120) und der zweiten Schale (122) angeordnet ist
- durch eine erste Schalenverbindung (162) zwischen dem ersten Schalenstützteil (142) und der ersten Schale (120),
- durch eine zweite Schalenverbindung (164) zwischen dem zweiten Schalenstützteil (144) und der ersten Schale (120), und
- durch eine Elementverbindung (166, 158, 160) zwischen dem Elementstützteil (146) und der zweiten Schale (122).

2. Rotorblatt (100) nach Anspruch 1,
- wobei das Verbindungselement (140) ausschließlich in einem Hinterkantenbereich (118) des Rotorblatts (100) angeordnet ist, und/oder
- wobei das Verbindungselement (140) ausschließlich innerhalb des Rotorblatts (100) in Sehnenrichtung (106) zwischen 60 % und 100 % einer Sehnenlänge (104) des Rotorblatts (100) angeordnet ist.

3. Rotorblatt (100) nach einem der vorhergehenden Ansprüche, wobei sich das Verbindungselement (140) innerhalb des Rotorblatts (100) in Längsrichtung (102) in einem Bereich von 10 %, insbesondere von 20 %, vorzugsweise von 25 %, einer Blattlänge (101) des Rotorblatts (100) zur Blattspitze (103) hin und/oder bis zu 98 %, insbesondere zu 90 %, vorzugsweise zu 80 %, besonders bevorzugt zu 70 % einer Blattlänge (101) des Rotorblatts (100) erstreckt.

4. Rotorblatt (100) nach einem der vorhergehenden Ansprüche, wobei eine Elementlänge (141) des Verbindungselements (140) in Längsrichtung (102) so variiert, dass die Elementlänge (141) und eine Sehnenlänge (104) des Rotorblatts (100) zumindest teilweise positiv korreliert sind.

5. Rotorblatt (100) nach einem der vorhergehenden Ansprüche, wobei das Verbindungselement (140) in Sehnenrichtung (106) innerhalb des Rotorblatts (100) so angeordnet ist, dass ein Hinterkantenabstand (168) zwischen dem jeweiligen Verbindungselement (140) und der Hinterkante (116) in Abhängigkeit von einer Längsposition in Längsrichtung (102) des jeweiligen Verbindungselements (140) und/oder in Abhängigkeit von einer Sehnenlänge (104) des Rotorblatts (100) bestimmt wird.

6. Rotorblatt (100) nach Anspruch 5, wobei der Hinterkantenabstand (168) in Längsrichtung (102) so variiert, dass der Hinterkantenabstand (168) und eine Sehnenlänge (104) des Rotorblatts (100) zumindest teilweise positiv korreliert sind.

7. Rotorblatt (100) nach Anspruch 5 oder 6, wobei das Verbindungselement (140) in Sehnenrichtung (106) so im Rotorblatt (100) angeordnet ist, dass,
- wenn es in einem Längsbereich zwischen 10 % und 50 % einer Blattlänge (101) des Rotorblatts (100) angeordnet ist, der Hinterkantenabstand (168) zwischen dem Verbindungselement (140) und der Hinterkante (116) 25 % nicht übersteigt und/oder nicht weniger als 15 % einer jeweiligen Sehnenlänge (106) beträgt,
- wenn sie in einem Längsbereich zwischen 50 % und 70 % einer Blattlänge (101) des Rotorblatts (100) angeordnet sind, ein Hinterkantenabstand (168) zwischen dem Verbindungselement (140) und der Hinterkante (116) 20% nicht überschreitet und/oder 10% einer jeweiligen Sehnenlänge (106) nicht unterschreitet, und/oder
- wenn sie in einem Längsbereich zwischen 70% und 90% einer Blattlänge (101) des Rotorblatts (100) angeordnet sind, ein Hinterkantenabstand (168) zwischen dem jeweiligen Verbindungselement (140) und der Hinterkante (116) 15% nicht überschreitet und/oder nicht weniger als 5% einer jeweiligen Sehnenlänge (106) beträgt.

8. Rotorblatt (100) nach einem der vorhergehenden Ansprüche, wobei das Verbindungselement (140) so konfiguriert ist, dass eine maximale Höhe (148) des Verbindungselements (140) in einem nicht montierten Zustand des Verbindungselements (140) größer ist als eine maximale Höhe (150) des Verbindungselements (140), wenn es an seiner vorgesehenen Stelle zwischen der ersten Schale (120) und der zweiten Schale (122) montiert ist.

9. Rotorblatt (100) nach Anspruch 8, wobei das Verbindungselement (140) eine flexible Struktur aufweist, die so konfiguriert ist, dass sie ein Rotationsmoment entlang einer Längsachse des Verbindungselements (140) während der Herstellung des Rotorblatts (100) aufhebt, so dass eine unerwünschte Veränderung der Position des Verbindungselements verhindert wird.

10. Rotorblatt (100) nach einem der vorhergehenden Ansprüche,
- wobei die erste Schale (120) und/oder die zweite Schale (122) mindestens einen Sandwichstrukturteil mit einem Außenhautlaminat (134), einem Innenhautlaminat (136) und einem Kernmaterial (138), das von dem Außenhautlaminat (134) und dem Innenhautlaminat (136) umschlossen ist, wodurch ein Sandwichstrukturabschnitt (132) gebildet wird, und mindestens einen monolithischen Teil (130) mit einem Außenhautlaminat (134) und ohne Kernmaterial umfasst,
- wobei die erste Schalenverbindung (162), die zweite Schalenverbindung (164) und/oder die Elementverbindung (166) an einem monolithischen Teil (130) und insbesondere nicht an einem Sandwichstrukturteil angeordnet ist/sind.

11. Rotorblatt (100) nach einem der vorhergehenden Ansprüche, wobei der Elementstützteil (146) eine Elementbrücke (156) umfasst, die es ermöglicht, dass die Elementverbindung (166) als eine erste Elementverbindung (158) und eine zweite Elementverbindung (160) ausgeführt wird, die beide durch die Elementbrücke (156) verbunden sind.

12. Windkraftanlage (10) umfassend einen Turm (12), eine Gondel (16), die drehbar an dem Turm (12) angebracht ist, und einen Rotor (18), der drehbar von der Gondel (16) gestützt wird, wobei der Rotor (18) eine Nabe (20) und mindestens ein Rotorblatt (100) nach einem der vorhergehenden Ansprüche umfasst.

13. Verfahren zur Herstellung eines Rotorblatts (100) nach einem der Ansprüche 1 bis 11, wobei das Verfahren die Schritte umfasst:
- Positionieren des Elementstützteils (146) auf einer Innenoberfläche der zweiten Schale (122); und
- Verbinden der ersten Schale (120) und der zweiten Schale (122), und insbesondere
- Aufbringen von Klebstoff auf eine Oberfläche des ersten Schalenstützteils (142) und auf eine Oberfläche des zweiten Schalenstützteils (144), wobei die jeweiligen Oberflächen dazu bestimmt sind, an eine innere Oberfläche der ersten Schale (120) anzugrenzen.

14. Verfahren zur Herstellung eines Rotorblattes (100) nach Anspruch 13, wobei der Schritt des Positionierens des Elementstützteils (146) das feste Herstellen der Elementverbindung (166) vor dem Verbinden der ersten Schale (120) und der zweiten Schale (122) umfasst.

## Revendications

1. Pale de rotor (100), comprenant :
- une première coque (120) et une seconde coque (122), formant une première surface aérodynamique (110), une seconde surface aérodynamique (112), un bord de fuite (116) et un bord d'attaque (114) ;
- au moins une structure de support principale pour augmenter la rigidité en flexion de la pale de rotor (100), dans laquelle la structure de support principale est disposée dans une zone centrale (119) de la pale de rotor (100) et est reliée à la première coque (120) et à la seconde coque (122) ;
- au moins un élément de liaison (140) ayant au moins une première partie de support de coque (142), une seconde partie de support de coque (144) et une partie support d'élément (146),
- dans laquelle l'élément de liaison (140) est disposé entre la structure de support principale et le bord de fuite (116) de la pale de rotor (100),
- dans laquelle la première partie de support de coque (142) est reliée à la partie support d'élément (146) par un premier bras (152),
- dans laquelle la seconde partie de support de coque (144) est reliée à la partie support d'élément (146) par un second bras (154),
- dans laquelle l'élément de liaison (140) est disposé entre la première coque (120) et la seconde coque (122)
- par une première liaison de coque (162) entre la première partie de support de coque (142) et la première coque (120),
- par une seconde liaison de coque (164) entre la seconde partie de support de coque (144) et la première coque (120), et
- par une liaison d'élément (166, 158, 160) entre la partie support d'élément (146) et la seconde coque (122).

2. Pale de rotor (100) selon la revendication 1,
- dans laquelle l'élément de liaison (140) est exclusivement disposé dans une zone de bord de fuite (118) de la pale de rotor (100), et/ou
- dans laquelle l'élément de liaison (140) est exclusivement disposé à l'intérieur de la pale de rotor (100) dans une direction dans le sens de la corde (106) entre 60 % et 100 % d'une longueur de corde (104) de la pale de rotor (100).

3. Pale de rotor (100) selon l'une des revendications précédentes, dans laquelle l'élément de liaison (140) s'étend à l'intérieur de la pale de rotor (100) dans la direction longitudinale (102) dans une zone de 10 %, en particulier de 20 %, de préférence de 25 %, d'une longueur de pale (101) de la pale de rotor (100) vers l'extrémité de la pale (103) et/ou jusqu'à 98 %, en particulier à 90 %, de préférence à 80 %, plus préférablement à 70 % d'une longueur de pale (101) de la pale de rotor (100).

4. Pale de rotor (100) selon l'une des revendications précédentes, dans laquelle une longueur d'élément (141) de l'élément de liaison (140) varie dans une direction longitudinale (102) de telle sorte que la longueur d'élément (141) et une longueur de corde (104) de la pale de rotor (100) sont au moins partiellement en corrélation positive.

5. Pale de rotor (100) selon l'une des revendications précédentes, dans laquelle l'élément de liaison (140) est positionné dans la direction dans le sens de la corde (106) à l'intérieur de la pale de rotor (100) de telle sorte qu'une distance de bord de fuite (168) entre l'élément de liaison (140) respectif et le bord de fuite (116) est déterminée selon une position longitudinale dans la direction longitudinale (102) de l'élément de liaison respectif (140) et/ou selon une longueur de corde (104) de la pale de rotor (100).

6. Pale de rotor (100) selon la revendication 5, dans laquelle la distance du bord de fuite (168) varie dans la direction longitudinale (102) de telle sorte que la distance du bord de fuite (168) et une longueur de corde (104) de la pale de rotor (100) sont au moins partiellement en corrélation positive.

7. Pale de rotor (100) selon la revendication 5 ou 6, dans laquelle l'élément de liaison (140) est positionné dans la direction dans le sens de la corde (106) à l'intérieur de la pale de rotor (100) de telle sorte que,
- s'il est disposé dans une plage longitudinale comprise entre 10 % et 50 % d'une longueur de pale (101) du rotor (100), la distance du bord de fuite (168) entre l'élément de liaison (140) et le bord de fuite (116) ne dépasse pas 25 % et/ou n'est pas inférieure à 15 % d'une longueur de corde (106) respective,
- s'il est disposé dans une plage longitudinale comprise entre 50 % et 70 % d'une longueur de pale (101) de la pale de rotor (100), une distance de bord de fuite (168) entre l'élément de liaison (140) et le bord de fuite (116) ne dépasse pas 20 % et/ou n'est pas inférieure à 10 % d'une longueur de corde (106) respective, et/ou
- s'il est disposé dans une plage longitudinale comprise entre 70 % et 90 % d'une longueur de pale (101) de la pale de rotor (100), une distance de bord de fuite (168) entre l'élément de liaison respectif (140) et le bord de fuite (116) ne dépasse pas 15 % et/ou n'est pas inférieure à 5 % d'une longueur de corde (106) respective.

8. Pale de rotor (100) selon l'une des revendications précédentes, dans laquelle l'élément de liaison (140) est conçu de telle sorte qu'une hauteur maximale (148) de l'élément de liaison (140) dans un état non monté de l'élément de liaison (140) est supérieure à une hauteur maximale (150) de l'élément de liaison (140) lorsqu'il est monté à son emplacement désigné entre la première coque (120) et la seconde coque (122).

9. Pale de rotor (100) selon la revendication 8, dans laquelle l'élément de liaison (140) a une structure souple, qui est conçue pour annuler un moment de rotation le long d'un axe longitudinal de l'élément de liaison (140) pendant la fabrication de la pale de rotor (100), de sorte qu'un changement indésirable de la position de l'élément de liaison est empêché.

10. Pale de rotor (100) selon l'une des revendications précédentes,
- dans laquelle la première coque (120) et/ou la seconde coque (122) comprennent au moins une partie de structure sandwich ayant un stratifié de revêtement externe (134), un stratifié de revêtement interne (136) et un matériau central (138) renfermé par le stratifié de revêtement externe (134) et le stratifié de revêtement interne (136) formant ainsi une partie de structure sandwich (132), et au moins une partie monolithique (130) ayant un stratifié de revêtement externe (134) et n'ayant pas de matériau central,
- dans lequel la première liaison de coque (162), la seconde liaison de coque (164) et/ou la liaison d'élément (166) sont positionnées au niveau d'une partie monolithique (130), et en particulier ne sont pas positionnées au niveau d'une partie de structure sandwich.

11. Pale de rotor (100) selon l'une des revendications précédentes, dans laquelle la partie support d'élément (146) comprend un pont d'élément (156) permettant à la liaison d'élément (166) de représenter une première liaison d'élément (158) et une seconde liaison d'élément (160), toutes deux étant reliées par le pont d'élément (156).

12. Éolienne (10) comprenant une tour (12), une nacelle (16) montée de manière rotative sur la tour (12), et un rotor (18) supporté de manière rotative par la nacelle (16), dans laquelle le rotor (18) comprend un moyeu (20) et au moins une pale de rotor (100) selon l'une des revendications précédentes.

13. Procédé de fabrication d'une pale de rotor (100) selon l'une des revendications 1 à 11, le procédé comprenant les étapes consistant à :
- positionner la partie support d'élément (146) sur une surface intérieure de la seconde coque (122) ; et
- relier la première coque (120) et la seconde coque (122), et en particulier
- placer de l'adhésif sur une surface de la première partie de support de coque (142) et sur une surface de la seconde partie de support de coque (144), dans lequel les surfaces respectives sont destinées à être adjointes à une surface interne de la première coque (120).

14. Procédé de fabrication d'une pale de rotor (100) selon la revendication 13, dans lequel l'étape consistant à positionner la partie support d'élément (146) comprend l'établissement ferme de la liaison de l'élément (166) avant de relier la première coque (120) et la seconde coque (122).
